# EUROPÄISCHE PATENTANMELDUNG

(11) **EP 4 597 801 A1**
(43) Veröffentlichungstag der Anmeldung: **06.08.2025**
(21) Anmeldenummer: 24154712.4
(22) Anmeldetag: 30.01.2024
(51) Int. Cl.: H02K 3/52, H02K 5/22, H02K 7/14

(54) **STATOR MIT MEHREREN ANSCHLÜSSEN**

(71) Anmelder: Hilti Aktiengesellschaft, 9494 Schaan (LI)
(72) Erfinder: Tussing, Torsten, 86836 Obermeitingen (DE); Artmann, Konrad, 86938 Schondorf (DE)
(74) Vertreter: Hilti Aktiengesellschaft Corporate Intellectual Property

(57) **Zusammenfassung**

Stator für einen Elektromotor, insbesondere als Antrieb für eine Werkzeugmaschine, enthaltend ein Statorblechpaket mit wenigstens einem ersten und zweiten Polzahn zum jeweiligen Aufnehmen und Halten wenigstens eines Spulendrahts sowie wenigstens eine erste und zweite Kontaktschiene zum elektrischen Kontaktieren jeweils eines Spulendrahts.

Jede Kontaktschiene enthält wenigstens ein erstes und zweites Anschlusselement, wobei das erste Anschlusselement in einer ersten Ebene und das zweite Anschlusselement in einer zweiten Ebene positioniert ist.

## Beschreibung

### Stator mit mehreren Anschlüssen

Die vorliegende Erfindung betrifft einen Stator für einen Elektromotor, insbesondere als Antrieb für eine Werkzeugmaschine, enthaltend ein Statorblechpaket mit wenigstens einem ersten und zweiten Polzahn zum jeweiligen Aufnehmen und Halten wenigstens eines Spulendrahts sowie wenigstens eine erste und zweite Kontaktschiene zum elektrischen Kontaktieren jeweils eines Spulendrahts.

Des Weiteren betrifft die vorliegende Erfindung einen Elektromotor mit einem Stator.

Darüber hinaus betrifft die vorliegende Erfindung eine Werkzeugmaschine mit einem Stator.

Aus dem Stand der Technik sind Elektromotoren, insbesondere als Antrieb für Werkzeugmaschinen, bekannt, die zum Erzeugen eines Drehmoments im Wesentlichen einen Stator und einen relativ zu dem Stator drehbaren Rotor enthalten.

Elektromotoren, wie beispielsweise bürstenlose Gleichstrommotoren, sind für gewöhnlich im Inneren eines Gehäuses einer Werkzeugmaschine positioniert. Der Bauraum im Inneren eines Werkzeugmaschinengehäuses ist oftmals sehr gering, sodass nur wenig Volumen zur vorteilhaften bzw. gewünschten Positionierung der Baukomponenten (und besondere des Elektromotors) zur Verfügung steht.

Des Weiteren können Werkzeugmaschinen in unterschiedlichsten Ausführungsformen, wie beispielsweise Bohrhammer, Meißelhammer, Schleifgeräte, Sägen. Lampen oder dergleichen, ausgestaltet sein. Der Bauraum im Inneren dieser unterschiedlichen Werkzeugmaschinen kann ebenfalls sehr unterschiedlich ausgestaltet sein. Eine vorteilhafte bzw. gewünschte Positionierung oder Anordnung eines standardisierten Elektromotors in all diesen verschiedenen Werkzeugmaschinengehäusen kann zu erheblichen Umbaumaßnahmen bzw. Konstruktionsanpassungen entweder an dem Elektromotor und/oder an den entsprechenden Werkzeugmaschinengehäusen führen.

Es ist damit Aufgabe der vorliegenden Erfindung das vorstehend beschriebene Problem zu lösen.

Die Aufgabe wird gelöst durch den Gegenstand des unabhängigen Patentanspruchs 1, 4 und 5. Weitere vorteilhafte Ausführungsformen des erfindungsgemäßen Gegenstands sind in den entsprechenden abhängigen Patentansprüchen enthalten.

Die Aufgabe wird dabei insbesondere gelöst durch einen Stator für einen Elektromotor, insbesondere als Antrieb für eine Werkzeugmaschine, enthaltend ein Statorblechpaket mit wenigstens einem ersten und zweiten Polzahn zum jeweiligen Aufnehmen und Halten wenigstens eines Spulendrahts sowie wenigstens eine erste und zweite Kontaktschiene zum elektrischen Kontaktieren jeweils eines Spulendrahts.

Erfindungsgemäß ist vorgesehen, dass jede Kontaktschiene wenigstens ein erstes und zweites Anschlusselement enthält, wobei das erste Anschlusselement in einer ersten Ebene und das zweite Anschlusselement in einer zweiten Ebene positioniert ist.

Gemäß einer vorteilhaften Ausführungsform kann es möglich sein, die erste und zweite Ebene als zwei sich schneidende Ebenen ausgestaltet sind.

Entsprechend einer weiteren vorteilhaften Ausführungsform kann es möglich sein, dass die erste und zweite Ebene im Wesentlichen orthogonal zueinander angeordnet ist.

Gemäß einer weiteren vorteilhaften Ausführungsform kann es möglich sein, dass das erste und/oder zweite Anschlusselement für eine stoffschlüssige, formschlüssige und/oder kraftschlüssige Anbindung an ein Stromkabel ausgestaltet ist.

Entsprechend einer weiteren vorteilhaften Ausführungsform kann es möglich sein, dass das erste und/oder zweite Anschlusselement zum Anschweißen, Anlöten, Anschrauben und/oder Anstecken an ein Stromkabel ausgestaltet ist.

Gemäß einer weiteren vorteilhaften Ausführungsform kann es möglich sein, dass das erste und/oder zweite Anschlusselement als Buchse ausgestaltet ist.

Des Weiteren wird die Aufgabe gelöst durch einen Elektromotor mit einem Stator.

Darüber hinaus wird die Aufgabe gelöst durch eine Werkzeugmaschine mit einem Stator.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine erfindungsgemäße Werkzeugmaschine gemäß einer beispielhaften Ausführungsform;
- Figur 2: eine Vorderansicht auf einen Elektromotor mit einem Stator und Rotor;
- Figur 3: eine perspektivische Ansicht auf den Stator gemäß einer beispielhaften Ausführungsform;
- Figur 4: eine perspektivische Ansicht auf eine Kontaktschiene mit einem ersten und zweiten Anschlusselement gemäß einer beispielhaften Ausführungsform;
- Figur 5: eine weitere perspektivische Ansicht auf den Stator mit einer Anzahl an Stromkabeln gemäß einer ersten beispielhaften Ausführungsform;
- Figur 6: eine Draufsicht auf den Stator mit einer Anzahl an Stromkabeln gemäß einer zweiten beispielhaften Ausführungsform; und
- Figur 7: eine weitere Draufsicht auf den Stator mit einer Anzahl an Stromkabeln gemäß einer dritten beispielhaften Ausführungsform.

### Ausführungsbeispiele:

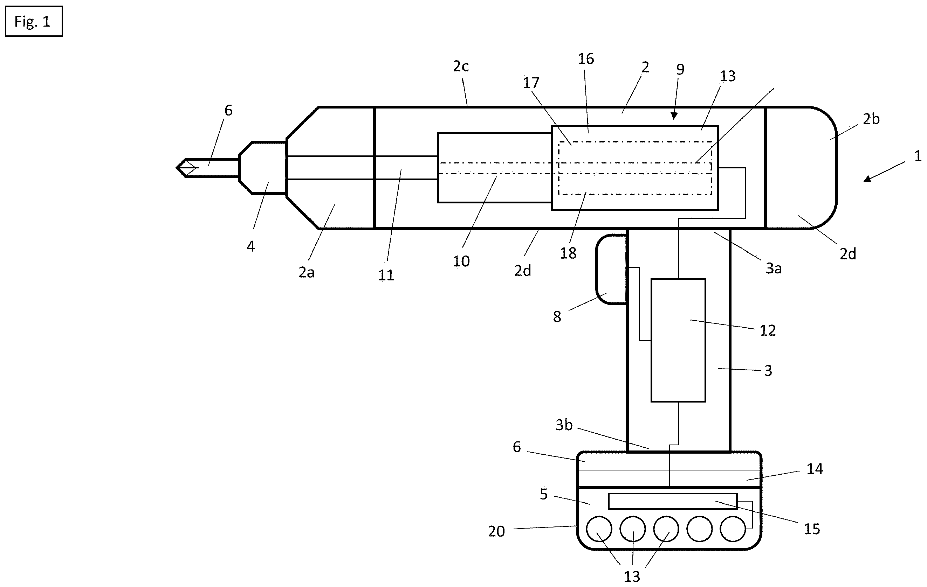

Figur 1 zeigt eine Werkzeugmaschine 1 gemäß einer beispielhaften Ausführungsform. Die Werkzeugmaschine 1 ist in Form einer akkubetriebenen Bohrmaschine ausgestaltet.

Gemäß einem alternativen Ausführungsbeispiel kann die Werkzeugmaschine auch in Form einer Säge, eines Schleifgeräts, eines Bohrhammers oder dergleichen ausgestaltet sein.

Die als Bohrmaschine ausgestaltete Werkzeugmaschine 1 enthält dabei im Wesentlichen ein Gehäuse 2, einen Handgriff 3, eine Werkzeugaufnahme 4 und eine Energieversorgung 5.

Das Gehäuse 2 weist ein vorderes Ende 2a, ein hinteres Ende 2b, ein oberes Ende 2c und ein unteres Ende 2d auf.

An dem vorderen Ende 2a des Gehäuses 2 ist die Werkzeugaufnahme 4 positioniert. Die Werkzeugaufnahme 4 dient zum Aufnehmen und Halten eines Werkzeugs. In den Figuren ist das Werkzeug nicht dargestellt.

In dem vorliegenden Ausführungsbeispiel kann das Werkzeug in Form eines Bohrers ausgestaltet. An dem unteren Ende 2d des Gehäuses 2 ist ein erstes Ende 3a des Handgriffs 3 positioniert. An dem zweiten Ende 3b des Handgriffs 3 ist eine Schnittstelle 6 vorgesehen.

Wie in Figur 1 gezeigt weist der Handgriff 3 einen Aktivierungsschalter 8 auf, mit dem die Werkzeugmaschine 1 in einen Aktivierungszustand oder Deaktivierungszustand eingestellt werden kann.

An die Schnittstelle 6 kann die Energieversorgung 5 wiederlösbar befestigt werden. In dem vorliegenden Ausführungsbeispiel ist die Energieversorgung 5 in Form eines Akkumulators ausgestaltete. Die Energieversorgung 5 dient zum Versorgen der Werkzeugmaschine mit elektrischer Energie.

Entsprechend einem alternativen Ausführungsbeispiel kann die Energieversorgung 5 auch als Kabel zum Verbinden der Werkzeugmaschine 1 mit einer Netzstromquelle (Steckdose) ausgestaltet sein. Die als Kabel ausgestaltete Energieversorgung 5 ist in den Figuren nicht dargestellt.

Im Inneren des Gehäuses 2 ist im Wesentlichen ein Elektromotor 9 als Antrieb, eine Getriebevorrichtung 10, eine Antriebswelle 11 und eine Steuereinrichtung 12 positioniert.

Der Elektromotor 9, die Getriebevorrichtung 10, die Antriebswelle 11 und die Werkzeugaufnahme 4 sind so im Inneren des Gehäuses 2 zueinander angeordnet, dass ein in dem Elektromotor 9 erzeugtes Drehmoment auf die Getriebevorrichtung 10, die Antriebswelle 11 und schließlich auf die Werkzeugaufnahme 4 bzw. auf das Werkzeug übertragen werden kann. Die Steuereinrichtung 12 ist mittels entsprechenden Leitungen L mit dem Aktivierungsschalter 8, der Akku-Schnittstelle 6 und dem Elektromotor 9 verbunden.

Die als Akkumulator ausgestaltete Energieversorgung 5 kann mit der Werkzeugmaschine 1 wiederlösbar verbunden werden, um die Werkzeugmaschine 1 mit elektrischer Energie zu versorgen. Der Akkumulator 5 enthält im Wesentlichen ein Akku-Gehäuse 20, eine Anzahl an Energiespeicherzellen 13, eine Akku-Schnittstelle 14 sowie eine Steuerungseinrichtung 15.

Die Energiespeicherzellen 13 können auch als Akku-Zellen bezeichnet werden und sind im Inneren des Akku-Gehäuses 20 angeordnet.

Das Akku-Gehäuse 20 enthält dabei im Wesentlichen ein Deckelelement 20a, vier Seitenwände 20b und ein Bodenelement 20c.

Die Akku-Schnittstelle 14 ist an der Außenseite des Deckelelements 20a angeordnet und dient zum elektrischen bzw. elektronischen sowie mechanischen Verbinden des Akkumulators 5 mit der Werkzeugmaschine 1 oder einer Ladevorrichtung.

Die Ladevorrichtung dient zum Laden des Akkumulators 5 mit elektrischer Energie und ist in den Figuren nicht dargestellt.

Zum elektrischen bzw. elektronischen Verbinden weist die Akku-Schnittstelle 14 einen Pluskontakt, einen Minuskontakt und einen Kommunikationskontakt auf. Der Plus- und Minuskontakt dient zur Erzeugen eines Stromkreises, wenn der Akkumulator 5 mit einer Werkzeugmaschine 1 oder einer Ladevorrichtung verbunden ist. Der Kommunikationskontakt dient zum Senden und Empfangen von Daten sowie Informationen in Form von elektrischen Signalen.

Alternativ oder zusätzlich kann der Akkumulator 5 auch eine Funkkommunikation (z.B. Bluetooth) bzw. drahtlose Kommunikation enthalten.

Die Energiespeicherzellen 13 dienen zum Aufnehmen, Speichern und erneuten Abgeben elektrischer Energie. Die Energiespeicherzellen 13 sind in zylindrischer Form sowie auf Basis einer Lithium-lonen-Technologie ausgestaltet. Jede Energiespeicherzelle 13 enthält an einem Ende eine Kontakteinrichtung, die zur Übertragung elektrischer Energie dient. Die einzelnen Kontakteinrichtung sind über entsprechende Leitungen mit der Steuerungseinrichtung 15 des Akkumulators 5 verbunden.

Alternativ können die Energiespeicherzellen 13 auch auf einer anderen geeigneten Technologie basieren.

Die zylindrische Form der Energiespeicherzellen 13 ist ebenfalls optional, sodass auch jede andere geeignete Form bzw. Geometrie gewählt werden kann. So ist es insbesondere auch möglich, dass die Energiespeicherzellen 13 als Pouchzellen ausgestaltet sind.

Es ist zudem auch möglich, dass der Akkumulator 5 sowohl zylindrische Energiespeicherzellen 13 als auch Pouch-Zellen enthält. Es ist insbesondere möglich, dass der Akkumulator 5 lediglich eine einzige zylindrische Energiespeicherzelle 13 und eine einzige Pouchzelle enthält.

Die Steuerungseinrichtung 15 regelt und steuert verschiedene Funktionen des Akkumulators 5. Zu den Funktion gehört unter anderen die Steuerung der Aufnahme und Abgabe von elektrischer Energie in bzw. aus den Energiespeicherzellen 13. Darüber hinaus wird mit Hilfe der Steuerungseinrichtung 15 die Menge an elektrischer Energie gesteuert, die von den Energiespeicherzellen 13 aufgenommen oder abgegeben werden sollen.

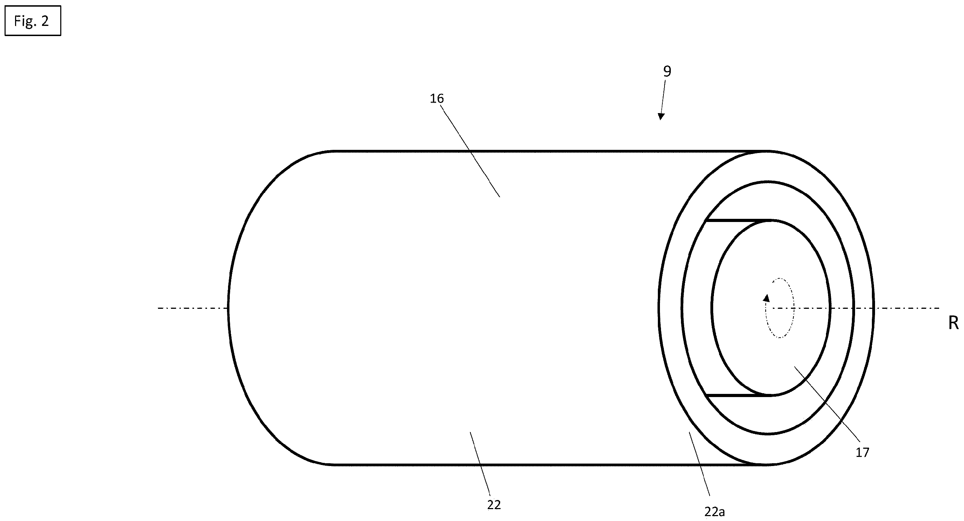

Der Elektromotor 9 ist in Form eines bürstenlosen Elektromotors ausgestaltet und enthält im Wesentlichen einen Stator 16 und einen Rotor 17, vgl. Figur 2. Der Rotor 17 ist dabei drehbar um eine Mittelachse R im Inneren des Stators 16 positioniert.

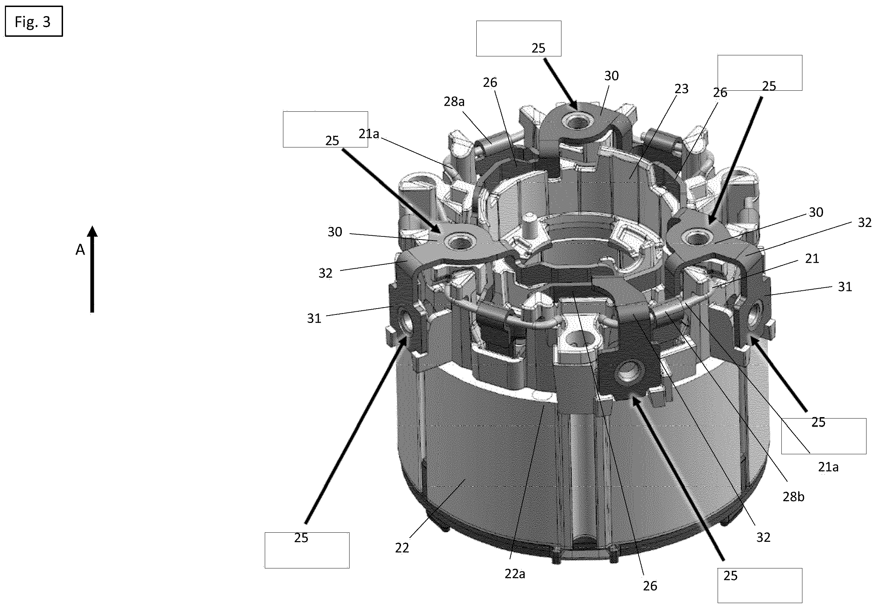

In den Figuren 3 bis 7 ist ein Stator 16 gemäß einer beispielhaften Ausführungsform gezeigt. Der Stator 16 enthält im Wesentlichen ein Statorblechpaket 22 mit sechs radial nach innen gerichteten Polzähnen 19. Das Statorblechpaket 22 besteht im Wesentlichen aus einer Anzahl an übereinander gestapelten Profilblechen.

Es sind jeweils zwei Polzähne 19 einander gegenüber positioniert. Gemäß einer alternativen Ausführungsform können auch mehr oder weniger als sechs Polzähne 19 vorgesehen sein. Die Polzähne 19 dienen zum jeweiligen Aufnehmen eines Spulendrahts 21 zum Erzeugen einer Spule 24. Die Spulen 24 sind entsprechend über die Steuereinrichtung 12 mit der Energieversorgung 5 verbunden, um eine elektrische Spannung an die Spulen 24 anzulegen. Mit anderen Worten: die Spulen 24 werden bestromt. Mit Hilfe der Spulen 24 wird ein abwechselndes Magnetfeld erzeugt, durch welches der Rotor 17 sich um die Mittelachse R gedreht wird.

Das Statorblechpaket 22 weist an einem ersten Ende 22a eine Wickelstütze 23 auf, welche in Pfeilrichtung A über bzw. an dem ersten Ende 22a des Statorblechpakets 22 positioniert ist. Die Wickelstütze 23 dient im Wesentlichen zum Stützen des Spulendrahts 21 um die Polzähne 19. Wie in den Figuren angedeutet treten die freien Enden 21a des Spulendrahts 21 an dem ersten Ende 22a des Statorblechpakets 22 aus der Wickelstütze 23 aus.

Des Weiteren ist in Pfeilrichtung A eine erste, zweite und dritte Kontaktschiene 25 positioniert. Die erste, zweite und dritte Kontaktschiene 25 sind dabei im Wesentlichen identisch ausgestaltet.

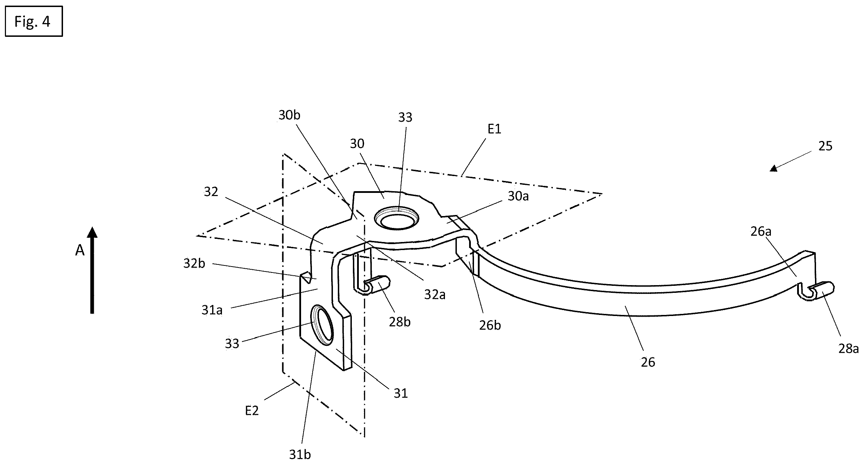

In Figur 4 ist eine Kontaktschiene 25 gemäß einer ersten beispielhaften Ausführungsform dargestellt. Die Kontaktschiene 25 weist im Wesentlichen einen länglichen, gebogenen Grundkörper 26 auf. Der Bogen bzw. der Radius des gebogenen Grundkörpers 26 ist dabei so gewählt, dass der Grundkörper 26 an den Kreisbogen des Statorblechpakets 22 angelegt werden kann. Wie insbesondere in Figur 3 ersichtlich, liegt der Grundkörper 26 der Kontaktschiene 25 in einer entsprechend gebogenen Aussparung 27 der Wickelstütze 23 und folgt der Form des Statorblechpakets 22.

An einem ersten Ende 26a des Grundkörpers 26 ist ein erstes Klemmelement 28a vorgesehen. Das erste Klemmelement 28a dient zum Aufnehmen und Halten eines Spulendrahts 21 einer Spule 24. An einem zweiten Ende 26b des Grundkörpers 26 ist eine erstes Anschlusselement 30 vorgesehen. Das erste Anschlusselement 30 ist dabei mit einem ersten Ende 30a mit dem zweiten Ende 26b des Grundkörpers 26 verbunden. An einem zweiten Ende 30b des ersten Anschlusselements 30 ist ein erstes Ende 32a eines Verbindungselements 32 befestigt. An einem zweiten Ende 32b des Verbindungselements 32 ist ein erstes Ende 31a eines zweiten Anschlusselements 31 befestigt. Das Verbindungselement 32 ist gemäß einer ersten beispielhaften Ausführungsform als Steg mit einem rechter Winkel (= 90°) ausgestaltet. Durch die Ausgestaltung des Verbindungselements 32 mit einem rechten Winkel ist das erste Anschlusselement 30 in einer ersten Ebene E1 und das zweite Anschlusselement 31 in einer zweiten Ebene E2 positioniert. Die erste Ebene E1 und zweite Ebene E1 sind als zwei sich schneidende Ebenen ausgestaltet sind und im Wesentlichen orthogonal zueinander angeordnet. Hierdurch ist das erste und zweite Anschlusselement 30, 31 entsprechend orthogonal zueinander angeordnet.

Alternativ ist die erste und zweite Ebene E1, E2 in einem flachen oder spitzen Winkel, d.h. in einem Winkel zueinander angeordnet, der größer oder kleiner als 90° ist, zueinander angeordnet.

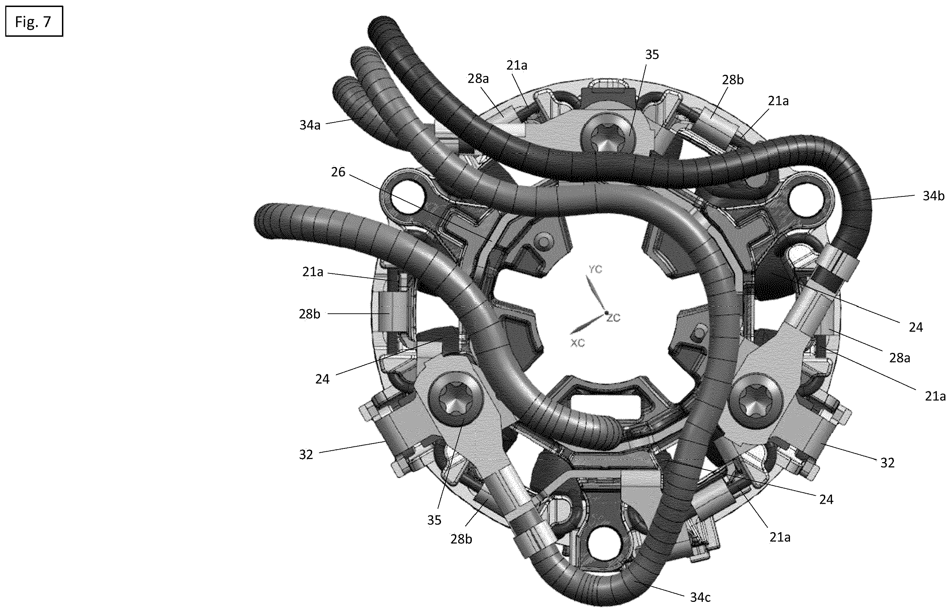

Darüber hinaus ist an dem ersten Anschlusselement 30 ein zweites Klemmelement 28b vorgesehen. Wie in Figur 3 ersichtlich ragt das zweite Klemmelement 28b entgegen der Pfeilrichtung A nach unten von dem zweiten Anschlusselement 28b. Wie auch das erste Klemmelement 28a dient auch das zweite Klemmelement 28b zum Aufnehmen und Halten eines Spulendrahts einer Spule 24. Das erste Klemmelement 28a dient zum Aufnehmen und Halten eines ersten Spulendrahts 21 einer ersten Spule 24 und das zweite Klemmelement 28b dient wiederum zum Aufnehmen und Halten eines zweiten Spulendrahts 21 einer zweiten Spule 24. Die erste und zweite Spule 24 sind dabei gegenüberliegend angeordnet, vgl. Figur 7.

Wie in Figur 4 besonders gut ersichtlich, sind ist das erste und zweite Klemmelement 28a, 28b in Form eines gebogenen Bleches, in den das Ende 21a eines Wickeldrahts 21 eingelegt und durch ein Verbiegen des Blechs eingeklemmt wird.

Gemäß einer alternativen Ausführungsform kann jeweils das erste und zweite Klemmelement 28a, 28b auch als grades Blech zum Anschweißen eines Endes 21a eines Wickeldrahts 21 ausgestaltete sein.

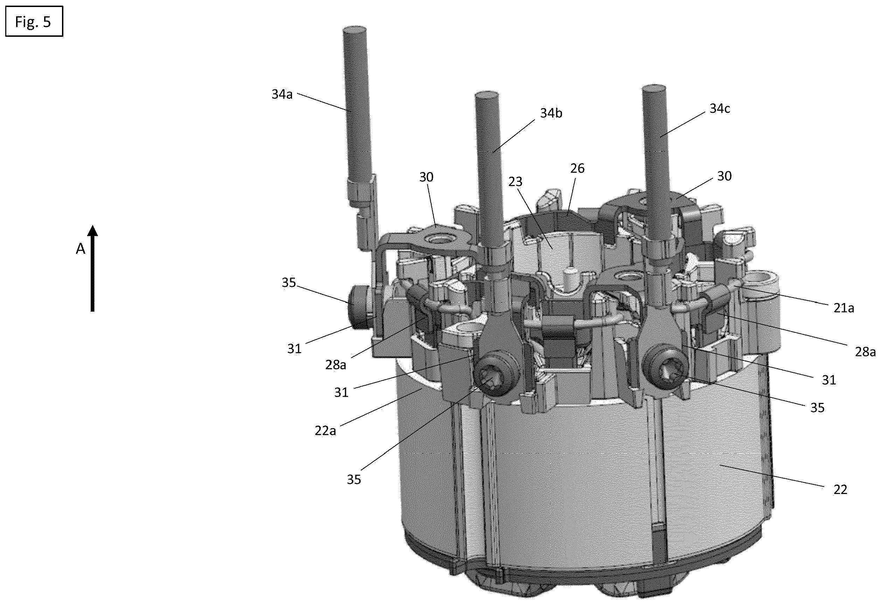

Das ersten und zweite Anschlusselement 30, 31 sind jeweils gemäß einem ersten Ausführungsbeispiel in Form einer Durchbohrung mit einem Innengewinde 33 ausgestaltet. Das Innengewinde 33 dient zum wiederlösbaren Verbinden der Kontaktschiene 25 mit einem Stromkabel 34a, 34b, 34c, vgl. Figur 5 bis 7. Wie in den Figuren 5 bis 7 gezeigt, wird zum wiederlösbaren Befestigen eines Stromkabels 34a, 34b, 34c mit einer Kontaktschiene 25 in jeweils eine Durchbohrung eine Schraube 35 gedreht.

Das Stromkabel 34a, 34b, 34c dient zum Versorgen der Kontaktschiene 25 und schließlich der Spule 24 mit elektrischer Energie von der Energieversorgung 5.

Entsprechend einer alternativen Ausführungsform kann wenigstens ein Anschlusselement 30, 31 so ausgestaltet sein, dass ein Stromkabel 34a, 34b, 34c an die Kontaktschiene 25 angeschweißt, angelötet oder lediglich angesteckt werden kann. Für eine entsprechende Steckverbindung kann das Anschlusselement 30, 31 als Buchse und das Ende eines Stromkabels 34a, 34b, 34c als zu der Buchse korrespondierender Stecker ausgestaltet sein.

In Figur 5 ist der Stator 16 gezeigt, bei dem ein erstes Stromkabel 34a an einem zweiten Anschlusselement 31 einer ersten Kontaktschiene 25, ein zweites Stromkabel 34b an einem zweiten Anschlusselement 31 einer zweiten Kontaktschiene 25 und ein drittes Stromkabel 34c an einem zweiten Anschlusselement 33 einer dritten Kontaktschiene 25 angeschlossen ist. Die drei Stromkabel 34a, 34b, 34c sind damit in radialer Richtung an dem Stator 16 angeschlossen, sodass die Stromkabel 34a, 34b, 34c in axialer Richtung (= in Richtung A) verlaufen. Die ersten Anschlusselemente 30 der jeweiligen Kontaktschienen 25 sind dabei nicht belegt.

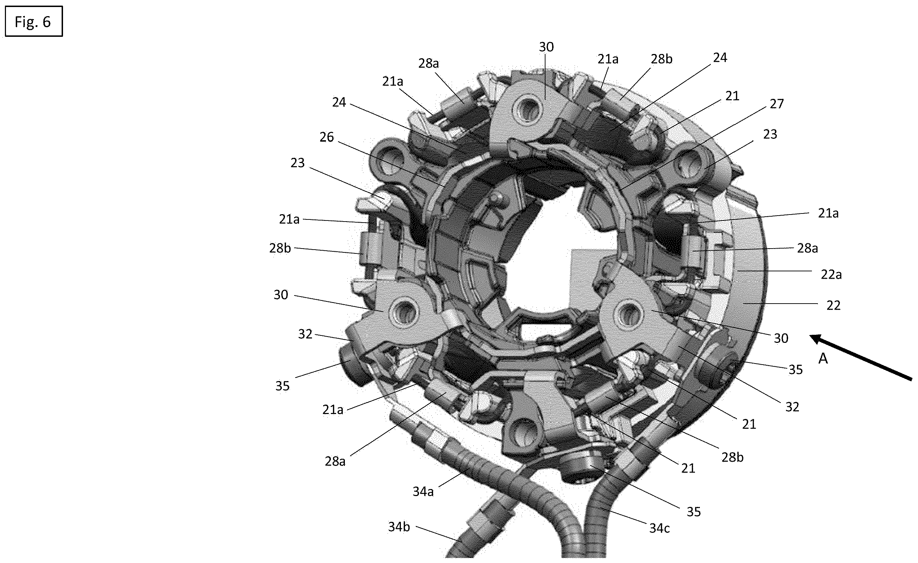

In Figur 6 ist der Stator 16 gezeigt, bei dem ein erstes Stromkabel 34a an einem zweiten Anschlusselement 31 einer ersten Kontaktschiene 25, ein zweites Stromkabel 34b an einem zweiten Anschlusselement 31 einer zweiten Kontaktschiene 25 und ein drittes Stromkabel 34c an einem zweiten Anschlusselement 31 einer dritten Kontaktschiene 25 angeschlossen ist. Die drei Stromkabel 34a, 34b, 34c sind damit in radialer Richtung an dem Stator 16 angeschlossen, wobei jedoch die jeweiligen Stromkabel 34a, 34b, 34c für einen ersten Abschnitt in eine tangentiale Richtung zu dem Statorblechpaket 22 verlaufen. Nach dem ersten Abschnitt verlaufen die Stromkabel 34a, 34b, 34c dann in radialer Richtung. Die ersten Anschlusselemente 30 der jeweiligen Kontaktschienen 25 sind wiederum nicht belegt.

In Figur 7 ist der Stator 16 gezeigt, bei dem ein erstes Stromkabel 34a an einem ersten Anschlusselement 30 einer ersten Kontaktschiene 25, ein zweites Stromkabel 34b an einem ersten Anschlusselement 30 einer zweiten Kontaktschiene 25 und ein drittes Stromkabel 34c an einem ersten Anschlusselement 30 einer dritten Kontaktschiene 25 angeschlossen ist. Die drei Stromkabel 34a, 34b, 34c sind damit in axialer Richtung an dem Stator 16 angeschlossen, sodass die jeweiligen Stromkabel 34a, 34b, 34c radialer Richtung verlaufen. Die zweiten Anschlusselemente 31 der jeweiligen Kontaktschienen 25 sind dabei nicht belegt.

### Bezugszeichen

- 1: Werkzeugmaschine
- 2: Gehäuse
- 2a: vorderes Ende des Gehäuses
- 2b: hinteres Ende des Gehäuses
- 2c: oberes Ende des Gehäuses
- 2d: unteres Ende des Gehäuses
- 3: Handgriff
- 3a: erstes Ende des Handgriffs
- 3b: zweites Ende des Handgriffs
- 4: Werkzeugaufnahme
- 5: Energieversorgung
- 6: Schnittstelle
- 8: Aktivierungsschalter
- 9: Elektromotor
- 10: Getriebevorrichtung
- 11: Antriebswelle
- 12: Steuereinrichtung
- 13: Energiespeicherzelle
- 14: Akku-Schnittstelle
- 15: Steuerungseinrichtung
- 16: Stator
- 17: Rotor
- 19: Polzahn
- 20: Akku-Gehäuse
- 21: Spulendraht
- 21a: Ende eines Spulendrahts
- 22: Statorblechpaket
- 22a: erstes Ende des Statorblechpakets
- 23: Wickelstütze
- 24: Spule
- 25: Kontaktschiene
- 26: Grundkörper der Kontaktschiene
- 26a: erstes Ende des Grundkörpers
- 26b: zweiten Ende des Grundkörpers
- 27: Aussparung an der Wickelstütze
- 28a: erstes Klemmelement
- 28b: zweites Klemmelement
- 30: erstes Anschlusselement
- 30a: erstes Ende des ersten Anschlusselements
- 30b: zweites Ende des ersten Anschlusselements
- 31: zweites Anschlusselement
- 31a: erstes Ende des zweiten Anschlusselements
- 31b: zweites Ende des zweiten Anschlusselements
- 32: Verbindungselement
- 32a: erstes Ende eines Verbindungselements
- 32b: zweites Ende eines Verbindungselements
- 33: Innengewinde
- 34a: erstes Stromkabel
- 34b: zweites Stromkabel
- 34c: drittes Stromkabel
- 35: Schraube

- R: Mittelachse
- E1: erste Ebene
- E2: zweite Ebene

## Patentansprüche

1. Stator (16) für einen Elektromotor (9), insbesondere als Antrieb für eine Werkzeugmaschine (1), enthaltend ein Statorblechpaket (22) mit wenigstens einem ersten und zweiten Polzahn (19) zum jeweiligen Aufnehmen und Halten wenigstens eines Spulendrahts (21) sowie wenigstens eine erste und zweite Kontaktschiene (25) zum elektrischen Kontaktieren jeweils eines Spulendrahts (21),
**dadurch gekennzeichnet, dass** jede Kontaktschiene (25) wenigstens ein erstes und zweites Anschlusselement (30, 31) enthält, wobei das erste Anschlusselement (30) in einer ersten Ebene (E1) und das zweite Anschlusselement (31) in einer zweiten Ebene (E2) positioniert ist.

2. Stator (16) nach Anspruch 1,
**dadurch gekennzeichnet, dass** die erste und zweite Ebene (E1, E2) als zwei sich schneidende Ebenen ausgestaltet sind.

3. Stator (16) nach Anspruch 1 oder 2,
**dadurch gekennzeichnet, dass** die erste und zweite Ebene (E1, E2) im Wesentlichen orthogonal zueinander angeordnet ist.

4. Stator (16) nach wenigstens einem der Ansprüche 1 bis 3,
**dadurch gekennzeichnet, dass** das erste und/oder zweite Anschlusselement (30, 31) für eine stoffschlüssige, formschlüssige und/oder kraftschlüssige Anbindung an ein Stromkabel (34a, 34b, 34c) ausgestaltet ist.

5. Stator (16) nach wenigstens einem der Ansprüche 1 bis 4,
**dadurch gekennzeichnet, dass** das erste und/oder zweite Anschlusselement (30, 31) zum Anschweißen, Anlöten, Anschrauben und/oder Anstecken an ein Stromkabel (34a, 34b, 34c) ausgestaltet ist.

6. Stator (16) nach wenigstens einem der Ansprüche 1 bis 5,
**dadurch gekennzeichnet, dass** das erste und/oder zweite Anschlusselement (30, 31) als Buchse ausgestaltet ist.

7. Elektromotor mit einem Stator (16) nach wenigstens einem der Ansprüche 1 bis 6.

8. Werkzeugmaschine mit einem Stator (16) nach wenigstens einem der Ansprüche 1 bis 6.
